(19) Europäisches Patentamt
European Patent Office
Office européen des brevets

(11) **EP 1 926 646 B1**

(12) **EUROPÄISCHE PATENTSCHRIFT**

(45) Veröffentlichungstag und Bekanntmachung des Hinweises auf die Patenterteilung:
**24.03.2010 Patentblatt 2010/12**

(21) Anmeldenummer: **06793569.2**

(22) Anmeldetag: **15.09.2006**

(51) Int Cl.:
**B60W 30/08** (2006.01) **B62D 15/02** (2006.01)

(86) Internationale Anmeldenummer:
**PCT/EP2006/066423**

(87) Internationale Veröffentlichungsnummer:
**WO 2007/031579 (22.03.2007 Gazette 2007/12)**

(54) **VERFAHREN UND VORRICHTUNG ZUM DURCHFÜHREN EINES AUSWEICHMANÖVERS**

METHOD AND DEVICE FOR CARRYING OUT A DEVIATING MANOEUVRE

PROCEDE ET DISPOSITIF PERMETTANT D'EFFECTUER UNE MANOEUVRE D'EVITEMENT

(84) Benannte Vertragsstaaten:
**DE FR**

(30) Priorität: **15.09.2005 DE 102005044204**
**15.09.2005 DE 102005044199**
**15.09.2005 DE 102005044200**
**27.01.2006 DE 102006004174**
**21.07.2006 DE 102006034254**
**21.07.2006 DE 102006034255**
**02.08.2006 DE 102006036363**

(43) Veröffentlichungstag der Anmeldung:
**04.06.2008 Patentblatt 2008/23**

(73) Patentinhaber: **Continental Teves AG & Co. oHG**
**60488 Frankfurt (DE)**

(72) Erfinder:
• **ARBITMANN, Maxim**
**61348 Bad Homburg (DE)**
• **STÄHLIN, Ulrich**
**64287 Darmstadt (DE)**
• **SCHORN, Matthias**
**64367 Mühltal (DE)**
• **ISERMANN, Rolf**
**64342 Seeheim (DE)**

(56) Entgegenhaltungen:
**EP-A- 0 582 236 WO-A-03/006288**
**DE-A1- 10 012 737 US-A1- 2004 193 374**

EP 1 926 646 B1

**Beschreibung**

**Technisches Gebiet**

Die Erfindung betrifft ein Verfahren zum Durchführen eines Ausweichmanövers eines Kraftfahrzeugs. Ferner betrifft die Erfindung eine Vorrichtung zum Durchführen eines Ausweichmanövers eines Kraftfahrzeugs, die zur Durchführung des Verfahrens geeignet ist.

**Hintergrund der Erfindung**

Ein Ziel bei der Entwicklung von Kraftfahrzeugen sind Fahrerassistenzsysteme zur Unfallvermeidung. Diese Systeme überwachen das Umfeld des Fahrzeugs, entscheiden, ob es zu einer Kollision mit einem Objekt kommen kann, und greifen in das Lenksystem oder das Bremssystem des Fahrzeugs ein, um den Unfall durch ein Ausweichen oder Abbremsen zu vermeiden. Es hat sich dabei gezeigt, dass Ausweichmanöver insbesondere bei hoher Fahrzeuggeschwindigkeit Vorteile gegenüber Notbremsungen haben. Zur Durchführung eines Ausweichmanövers wird bei einer drohenden Kollision üblicherweise eine Ausweichbahn für das Fahrzeug vorgegeben. Mittels eines Lenkungsaktuators, der durch einen Bahnfolgeregler gesteuert wird, wird dann das Lenksystem des Fahrzeugs derart beeinflusst, dass das Fahrzeug der berechneten Ausweichbahn folgt. Mit dem Lenkungsaktuator kann dabei beispielsweise unabhängig von den Fahrervorgaben ein Lenkwinkel an den lenkbaren Rädern des Fahrzeugs eingestellt werden, so dass das Ausweichmanöver automatisch ohne Fahrereingriff durchgeführt wird.
Der nächstliegende Stand der Technik ist US-A1-2004/193374 und zeigt ein Verfahren zum Durchführen eines Ausweichmanövers eines Kraftfahrzeugs, wobei eine Bahn für das Ausweichmanöver des Kraftfahrzeugs bestimmt wird, deren Gestalt durch wenigstens einen von der Geschwindigkeit des Kraftfahrzeugs abhängigen Parameter ermittelt wird.

**Darstellung der Erfindung**

Hiervon ausgehend ist es eine Aufgabe der vorliegenden Erfindung, das Ausweichen auf einer Bahn zu ermöglichen, die möglichst einfach berechenbar und insbesondere möglichst einfach parametrierbar ist.
Erfindungsgemäß wird diese Aufgabe durch ein Verfahren mit den Merkmalen des Patentanspruchs 1 und durch eine Vorrichtung mit den Merkmalen des Patentanspruchs 10 gelöst.
Demgemäß ist es vorgesehen, dass ein Verfahren der eingangs genannten Art mit den folgenden Schritten durchgeführt wird:

- Erfassen eines Objekts im Umfeld des Kraftfahrzeugs, mit dem sich das Kraftfahrzeug auf einem Kollisionskurs befindet,

- Bestimmen einer Bahn für das Ausweichmanöver des Kraftfahrzeugs, wobei die Bahn durch eine Sigmoide gegeben ist, deren Gestalt durch wenigstens einen Parameter bestimmt wird, wobei der Parameter in Abhängigkeit von der Geschwindigkeit des Kraftfahrzeugs und/oder einer gewünschten Manöverbreite des Ausweichmanövers ermittelt wird,

- Bestimmen eines Startpunkts, an dem das Ausweichmanöver gestartet wird, in Abhängigkeit von der ermittelten Bahn und

- Beeinflussen eines Lenksystems des Kraftfahrzeugs in Abhängigkeit von der ermittelten Bahn, nachdem das Kraftfahrzeug den Startpunkt erreicht hat.

Ferner ist es vorgesehen, dass eine Vorrichtung der eingangs genannten Art folgende Einrichtungen umfasst:

- eine Umfelderfassungseinrichtung, mit der wenigstens ein Objekt im Umfeld des Kraftfahrzeugs erfassbar ist, und eine Auswerteeinrichtung, mit der die relative Position und Geschwindigkeit des Hindernisses in Bezug auf das Kraftfahrzeug ermittelbar ist,

- eine Entscheidungseinrichtung, mit der eine Entscheidung darüber getroffen werden kann, dass ein Ausweichen des Kraftfahrzeugs aufgrund eines Kollisionskurses mit dem Objekt erforderlich ist,

- eine Bahnvorgabeeinrichtung, mit der eine Bahn für das Ausweichen des Kraftfahrzeugs vor dem Hindernis bestimmbar ist, wobei die Bahn durch eine Sigmoide gegeben ist, deren Gestalt durch wenigstens einen Parameter bestimmt ist, wobei der Parameter in Abhängigkeit von der Geschwindigkeit des Kraftfahrzeugs und/oder einer gewünschten Manöverbreite des Ausweichmanövers ermittelbar ist,

- eine Auslöseeinrichtung, mit der in Abhängigkeit von einer ermittelten Bahn ein Startpunkt bestimmbar ist, an dem das Ausweichmanöver zu starten ist, um dem Objekt auszuweichen, und

- eine Steuerungseinrichtung, mit der ein Lenkungsaktuator in Abhängigkeit von der Bahnvorgabe steuerbar ist.

Mit Vorteil ist die Bahn für das Ausweichmanöver erfindungsgemäß durch eine Sigmoide gegeben. Unter einer Sigmoide bzw. einer Sigmoidfunktion wird dabei im üblichen Sinne eine in etwa S-förmige, reelle, stetig differenzierbare, monotone und beschränkte Funktion mit einem Wendepunkt verstanden. Beispiele hierfür sind Funktionen von der Form einer hyperbolischen Tangensfunktion $f(x)=\alpha\tanh(\beta(x\text{-}\gamma))$, einer logistischen Funktion $f(x)=\alpha/(1+\exp(-\beta(x\text{-}\gamma))$, oder einer Arkustangensfunktion $f(x)=\alpha\arctan(\beta(x\text{-}\gamma))$, mit Parametern $\alpha,\beta,\gamma$. Anhand derartiger Funktionen kann die Ausweichbahn geschlossen angegeben werden, ohne beispielsweise eine abschnittsweise Definition unterschiedlicher Bogenabschnitte vornehmen zu müssen. Ferner hat sich gezeigt, dass Parameter, die die Gestalt der Sigmoide bestimmen, in einfacher und effizienter Weise bestimmbar sind. Insbesondere kann aufgrund weniger Bedingungen eine komfortable und kurze Ausweichbahn bestimmt werden, die den fahrphysikalischen Anforderungen gerecht wird.

Aufgrund der Gestalt der Ausweichbahn wird das Fahrzeug bei dem Ausweichmanöver bezüglich der ursprünglichen Fahrtrichtung in Querrichtung in etwa parallel versetzt. Unter der Manöverbreite wird dabei die Distanz des Querversatzes verstanden.

Bei einer Ausführungsform des Verfahrens und der Vorrichtung ist es vorgesehen, dass ein Parameter, der eine Steigung der Sigmoide bestimmt, in Abhängigkeit von der Geschwindigkeit des Kraftfahrzeugs derart bestimmt wird, dass eine bei dem Ausweichmanöver auftretende Querbeschleunigung des Kraftfahrzeugs einen vorgegebenen Maximalwert nicht überschreitet.

Hierdurch kann die Querbeschleunigung insbesondere auf fahrphysikalisch mögliche und die Fahrzeuginsassen nicht zu sehr belastende Werte begrenzt werden. Unter der Steigung der Sigmoide wird im üblichen Sinne die Steigung einer Tangente an die Sigmoide verstanden.

Eine weitere Ausführungsform des Verfahrens und der Vorrichtung sieht vor, dass der die Steigung der Sigmoide bestimmende Parameter in Abhängigkeit von der Geschwindigkeit des Kraftfahrzeugs derart bestimmt wird, dass ein bei dem Ausweichvorgang auftretender maximaler Querruck einen vorgegebenen Maximalwert nicht überschreitet.

Unter dem Querruck wird hier die Änderungsrate der Querbeschleunigung verstanden. Durch eine derartige Begrenzung kann insbesondere den realisierbaren Stellgeschwindigkeiten innerhalb des Lenksystems Rechnung getragen werden.

Eine Weiterbildung des Verfahrens und der Vorrichtung beinhaltet, dass die Sigmoide durch

$$y(x) = \frac{B}{1+\exp(-a\cdot(x-c))}$$

gegeben ist, wobei $y(x)$ einen lateralen Versatz des Kraftfahrzeugs und $x$ eine Wegstrecke in Längsrichtung in einem Koordinatensystem ist, dessen Ursprung im Wesentlichen mit dem Startpunkt des Ausweichmanövers übereinstimmt und dessen positive x-Richtung in die an dem Startpunkt vorliegende Fahrzeuglängsrichtung zeigt, wobei a der die Steigung der Sigmoide bestimmender Parameter ist, und wobei B und c weitere Parameter sind, die die Gestalt der Sigmoide bestimmen .

Eine derartige Sigmoide hat sich im Hinblick auf die Kurvenlänge der Ausweichbahn als vorteilhaft herausgestellt. Im Hinblick auf die Lage des Ursprungs des Koordinatensystems in Bezug auf den Startpunkt des Ausweichmanövers können insbesondere Abweichungen aufgrund einer Toleranz bestehen, die dadurch begründet sind, dass die Sigmoide nicht genau durch den Ursprung verläuft.

Eine weitere Ausführungsform des Verfahrens und der Vorrichtung beinhaltet, dass bei einem Ausweichen in Fahrzeuglängsrichtung nach links für die Parameter gilt:

$$B = D$$

$$c = \frac{1}{a}\ln\left(\frac{D}{y_{tol}} - 1\right)$$

wobei D die Manöverbreite des Ausweichmanövers und $y_{tol}$ eine vorgegebene Toleranz bezeichnet.

Ferner ist eine Ausführungsform des Verfahrens und der Vorrichtung **dadurch gekennzeichnet, dass** bei einem Ausweichen in Fahrzeuglängsrichtung nach rechts für die Parameter gilt:

$$B = -D$$

$$c = \frac{1}{a}\ln\left(\frac{D}{y_{tol}} - 1\right)$$

wobei D die Manöverbreite des Ausweichmanövers und $y_{tol}$ eine vorgegebene Toleranz bezeichnet.

Eine Ausgestaltung des Verfahrens und der Vorrichtung sieht ferner vor, dass die Manöverbreite in Abhängigkeit von der Breite einer dem Kraftfahrzeug zugewandten Objektfront ermittelt wird.

Hierdurch lässt sich der "optimale" Querversatz bei dem Ausweichmanöver bestimmen, so dass die Manöverbreite gerade dem zum Ausweichen erforderlichen Querversatz entspricht.

Bei einer weiteren Ausgestaltung des Verfahrens und der Vorrichtung ist es vorgesehen, dass die Manöverbreite derart bestimmt wird, dass das Kraftfahrzeug bei dem Ausweichmanöver von einer momentanen Fahrspur in die Mitte einer benachbarten Fahrspur gesteuert wird.

Vorteil dieser Strategie ist insbesondere, dass das Ausweichmanöver von dem Fahrer des Fahrzeugs einfach nachvollzogen werden kann.

Darüber hinaus wird ein Computerprogrammprodukt bereitgestellt, das einen Algorithmus definiert, der ein Verfahren der zuvor dargestellten Art umfasst.

Die Erfindung beinhaltet die Idee, die Bahn für das Ausweichmanöver als eine geschlossen definierte Funktion vorzugeben. Als besonders vorteilhaft im Hinblick auf die Länge der Bahn und damit die für das Ausweichmanöver erforderliche Zeit sowie im Hinblick auf die Parametrierbarkeit hat sich eine Sigmoide erwiesen. Diese kann anhand weniger Nebenbedingungen sinnvoll festgelegt werden.

Diese und andere Gesichtspunkte der Erfindung werden anhand der Ausführungsbeispiele weiter verdeutlicht und im Hinblick auf die Ausführungsbeispiele nachfolgend anhand der Figuren beschrieben.

**Kurze Beschreibung der Figuren**

Von den Figuren zeigt:

Fig. 1    eine schematische Darstellung eines Fahrzeugs mit einem Umfeldsensor zum Erfassen von Objekten im Umfeld des Fahrzeugs,

Fig. 2    ein schematisches Blockdiagramm eines Fahrerassistenzsystems zum Durchführen eines Ausweichmanövers zum Vermeiden einer Kollision mit einem Objekt,

Fig. 3    eine schematische Veranschaulichung von Größen, die zur Ermittlung eines Kollisionskurses und zur Planung einer Ausweichbahn herangezogen werden und

Fig. 4    ein Diagramm mit einer Funktionenschar einer Sigmoidfunktion für mehrere Werte des die Steigung bestimmenden Parameters.

**Darstellung von Ausführungsbeispielen**

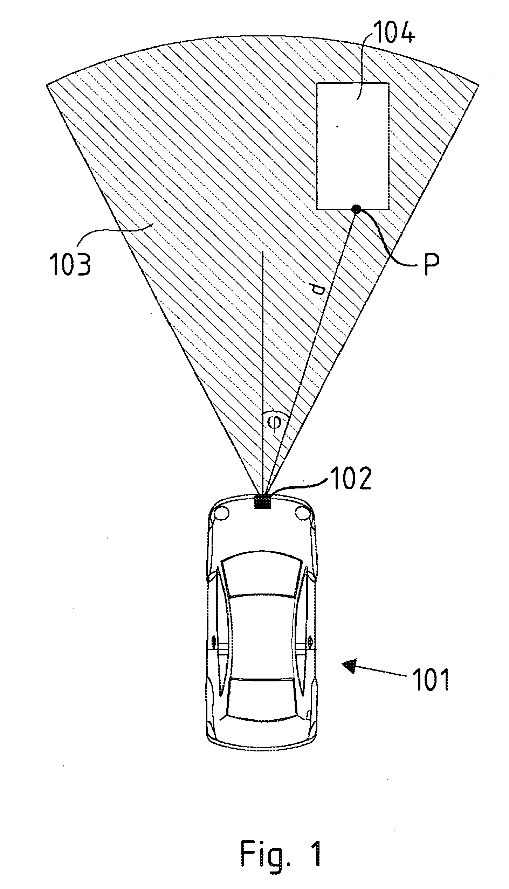

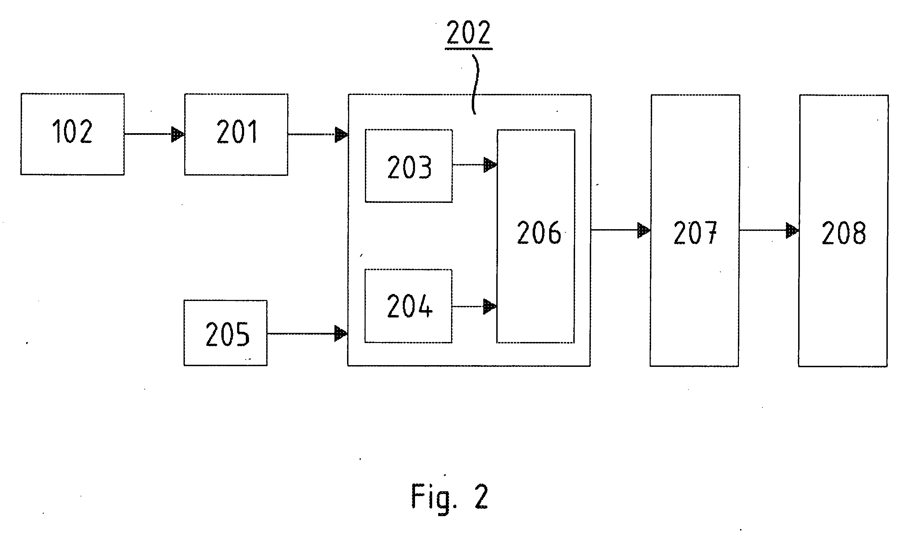

In Figur 1 ist beispielhaft ein vierrädriges, zweiachsiges Fahrzeug 101 dargestellt, das über einen Umfeldsensor 102 verfügt, mit dem Objekte im Umfeld des Fahrzeugs erfasst werden können, bei denen es sich insbesondere um weitere Kraftfahrzeuge handelt, die sich in derselben oder einer benachbarten Fahrspur seitlich und/oder vor dem Fahrzeug 101 bewegen. Beispielhaft wird ein Umfeldsensor 102 mit einem Erfassungsbereich 103 gezeigt, der einen Raumwinkel vor dem Fahrzeug 101 umfasst, in dem beispielhaft ein Objekt 104 dargestellt ist. Bei dem Umfeldsensor 102 handelt sich vorzugsweise um einen LIDAR-Sensor (Light Detection and Ranging) der dem Fachmann an sich bekannt ist; gleichfalls sind jedoch auch andere Umfeldsensoren einsetzbar. Der Sensor misst die Abstände d zu den erfassten Punkten eines Objekts sowie die Winkel φ zwischen den Verbindungsgeraden zu diesen Punkten und der Mittellängsachse des Fahrzeugs, wie dies in Figur 1 beispielhaft für einen Punkt P des Objekts 104 veranschaulicht ist. Die dem Fahrzeug 101 zugewandten Fronten der erfassten Objekte setzen sich aus mehreren erfassten Punkten zusammen, wobei eine in Figur 2 gezeigte Objekterkennungseinheit 201, zu der die Sensorsignale übermittelt werden, die Korrelationen zwischen Punkten und der Form eines Objekts herstellt und einen Bezugspunkt für das Objekt bestimmt. Als Bezugspunkt kann dabei beispielsweise der Mittelpunkt des Objekts bzw. der Mittelpunkt der erfassten Punkte des Objekts gewählt werden. Die Geschwindigkeiten der detektierten Punkte und damit die Geschwindigkeit der erfassten Objekte können mittels des Umfeldsensors 102 nicht direkt gemessen werden. Sie werden aus der Differenz zwischen den in aufeinander folgenden Zeitschritten gemessenen Abständen in der taktweise arbeitenden Objekterkennungseinheit 201 berechnet. In ähnlicher Weise kann grundsätzlich auch die Beschleunigung der Objekte durch zweimaliges Ableiten ihrer Positionen bestimmt werden. Figur 2 zeigt eine schematische Darstellung eines Fahrerassistenzsystems, dessen Bestandteile mit Ausnahme von Sensoren und Aktuatoren vorzugsweise als Softwaremodule ausgeführt sind, die innerhalb des Fahrzeugs 101 mittels eins Mikorprozessor ausgeführt werden. Wie in Figur 2 gezeigt, werden die Objektdaten in Form elektronischer Signale innerhalb des schematisch dargestellten Fahrerassistenzsystems an eine Entscheidungseinrichtung 202 übermittelt. In der Entscheidungseinrichtung 202 wird in Block 203 anhand der Informationen über das Objekt eine Objekttrajektorie bestimmt. Ferner wird eine Trajektorie des Fahrzeugs 101 in Block 204 anhand von Informationen über den fahrdynamischen Zustand des Fahrzeugs 101 ermittelt, die mithilfe von weiteren Fahrzeugsensoren 205 bestimmt werden. Insbesondere werden dabei die beispielsweise mithilfe von Raddrehzahlsensoren ermittelbare Fahrzeuggeschwindigkeit, der mittels eines Lenkwinkelsensors gemessene Lenkwinkel an den lenkbaren Rädern des Fahrzeugs 101, die Gierrate und/oder die Querbeschleunigung des Fahrzeugs 101, die mittels entsprechender Sensoren gemessen werden, herangezogen. Dann wird in der Entscheidungseinrichtung 202 innerhalb des Blocks 206 überprüft, ob sich das Kraftfahrzeug 101 auf einem Kollisionskurs mit einem der erfassten Objekte 104 befindet. Falls ein derartiger Kollisionskurs festgestellt wird und die ebenfalls in der Entscheidungseinrichtung 202 ermittelte Kollisionszeit (TTC, Time To Collision), d.h. die Zeitdauer bis zu der ermittelten Kollision mit dem Objekt 104, einen bestimmten Wert unterschreitet, wird ein Auslösesignal an eine Bahnvorgabeeinrichtung 207 übermittelt. Das Auslösesignal führt dazu, dass zunächst innerhalb der Bahnvorgabeeinrichtung eine Ausweichbahn $y(x)$ berechnet wird. Dann wird aufgrund der ermittelten Ausweichbahn ein Startpunkt für das Ausweichmanöver bestimmt, an dem das Ausweichmanöver gestartet werden muss, um dem Objekt 104 gerade noch ausweichen zu können. Diese Schritte werden vorzugsweise in Zeitschritten wiederholt, bis keine Kollisionsgefahr aufgrund von Kursänderungen des Objekts 104 oder des Fahrzeugs 101 mehr besteht oder bis das Fahrzeug 101 den Startpunkt für ein Ausweichmanöver erreicht. Ist dies der Fall, werden die Ausweichbahn oder diese Bahn repräsentierende Parameter an eine Lenkungsaktuatorsteuerung 208 übermittelt. Diese steuert dann in einer ersten, bevorzugten Ausführungsform einen Lenkungsaktuator derart an, dass an den lenkbaren Rädern des Kraftfahrzeugs Lenkwinkel eingestellt werden, die das Kraftfahrzeug der Ausweichbahn folgen lassen. Der Lenkungsaktuator ist in dieser Ausführungsform beispielsweise als eine an sich bekannte Überlagerungslenkung ausgeführt, mit dem fahrerunabhängig ein Lenkwinkel an den Vorderrädern des Kraftfahrzeugs 101 eingestellt werden kann. In einer weiteren Ausführungsform wird mittels des Lenkungsaktuators nach Maßgabe der berechneten Bahn ein Drehmoment auf eine von dem Fahrer bediente Lenkhandhabe aufgeprägt, wodurch der Fahrer eine Lenkempfehlung für ein Ausweichmanöver erhält. Als Lenkungsaktuator kommt in dieser Ausführungsform beispielsweise eine elektronische Servorlenkung verwendet werden.

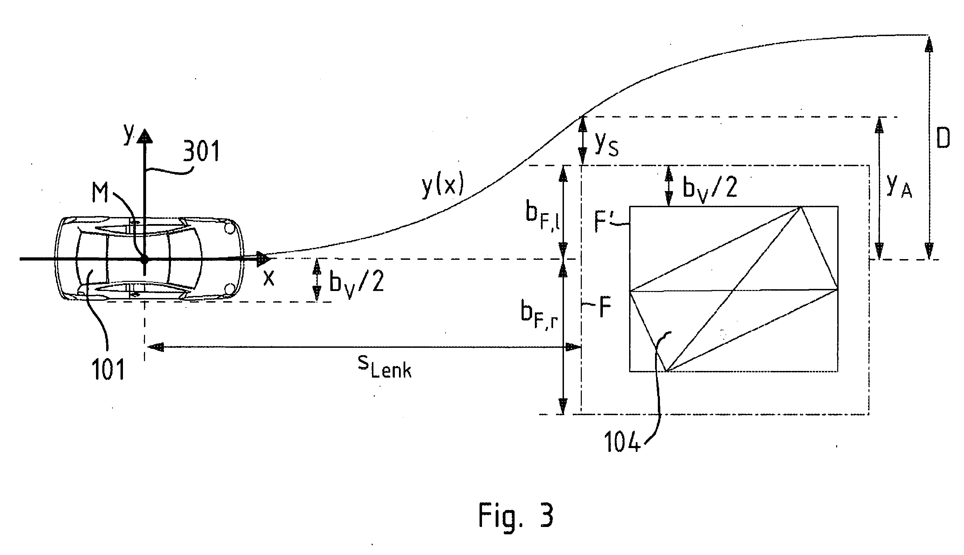

In Figur 3 sind Größen dargestellt, die für die Überprüfung, ob ein Kollisionskurs des Fahrzeugs 101 mit einem Objekt 104 besteht, für die Bahnplanung und für die Ermittlung des Startpunktes herangezogen werden. Ferner ist beispielhaft eine Ausweichbahn $y(x)$ dargestellt, auf der das Fahrzeug 101 dem Objekt 104 ausweichen kann. Bei der Berechnung der Trajektorie des Fahrzeugs und bei der Berechnung der Ausweichbahn wird das Fahrzeug 101 als punktförmig angesehen. Als Bezugspunkt M kann beispielsweise der Fahrzeugmittelpunkt oder der Fahrzeugschwerpunkt gewählt werden. Für das Objekt wird zunächst eine Objektfront $F'$ bestimmt, die rechtwinklig zur Fahrzeuglängsrichtung ausgerichtet ist, und deren Breite die dem Fahrzeug 101 zugewandten Seiten des Objekts gerade vollständig überdeckt. Für die Berechnung des Kollisionskurses und der Ausweichbahn wird dann von einer Objektfront $F$ ausgegangen, die um die halbe Fahrzeugbreite $b_v$ nach links und rechts vergrößert ist. Von einem Kollisionskurs wird ausgegangen, wenn die Trajektorie des Bezugspunktes des Kraftfahrzeugs, die Trajektorie der Objektfront $F$ aufgrund der Relativgeschwindigkeit zwischen dem Fahrzeug 101 und dem Objekt 104 und aufgrund des Kurses des Fahrzeugs 101 in Bezug auf das Objekt 104 schneidet.

Der Startpunkt für ein Ausweichmanöver zur Kollisionsvermeidung ergibt sich aus der Ausweichdistanz $s_{Lenk}$.

Dies ist die in der am Startpunkt des Ausweichmanövers vorliegenden Fahrzeuglängsrichtung gemessene Distanz zwischen dem Startpunkt und dem Punkt, an dem der Querversatz des Fahrzeugs gerade der erforderlichen Ausweichdistanz $y_A$ entspricht. Diese beträgt bei einem Ausweichen nach links $b_{F,l} + y_S$ und beträgt für ein Ausweichen nach rechts $b_{F,r} + y_S$, wobei $b_{F,l}$ der Teil der Breite der Objektfront F links von der Mittellängsachse des Fahrzeugs ist, $b_{F,r}$ der Teil rechts von der Mittellängsachse des Fahrzeugs und $y_S$ ein Sicherheitsabstand ist. Wie in Figur 3 ersichtlich, ist die Ausweichbreite $y_A$ im Allgemeinen geringer als der gesamte Querversatz $D$ des Fahrzeugs 101 bei dem Ausweichmanöver, der im Folgenden auch als Manöverbreite bezeichnet wird.

Vorzugsweise wird die Ausweichbahn in einem ortsfesten Koordinatensystem 301 angegeben, dessen Ursprung im Wesentlichen dem Bezugspunkt M des Fahrzeugs 101 beim Start des Ausweichmanövers entspricht und das für die Dauer des Ausweichmanövers fixiert ist. Die positive x-Achse des Koordinatensystems 301 zeigt in die am Startpunkt des Ausweichmanövers vorliegende Fahrzeuglängsrichtung und die positive y-Achse in Bezug auf diese Richtung nach links. In einem solchen Koordinatensystem gilt für die Ausweichdistanz $s_{Lenk}$:

**Fehler! Es ist nicht möglich, durch die Bearbeitung von Feldfunktionen Objekte zu erstellen.**

Die Ausweichdistanz kann somit in einfacher Weise aus der Umkehrfunktion der die Ausweichbahn angebenden Funktion ermittelt werden.

Die Ausweichbahn wird als eine so genannte Sigmoidfunktion berechnet. Insbesondere hat sie die Form

$$y = f(x) = \frac{B}{1 + \exp(-a(x - c))} \qquad (1)$$

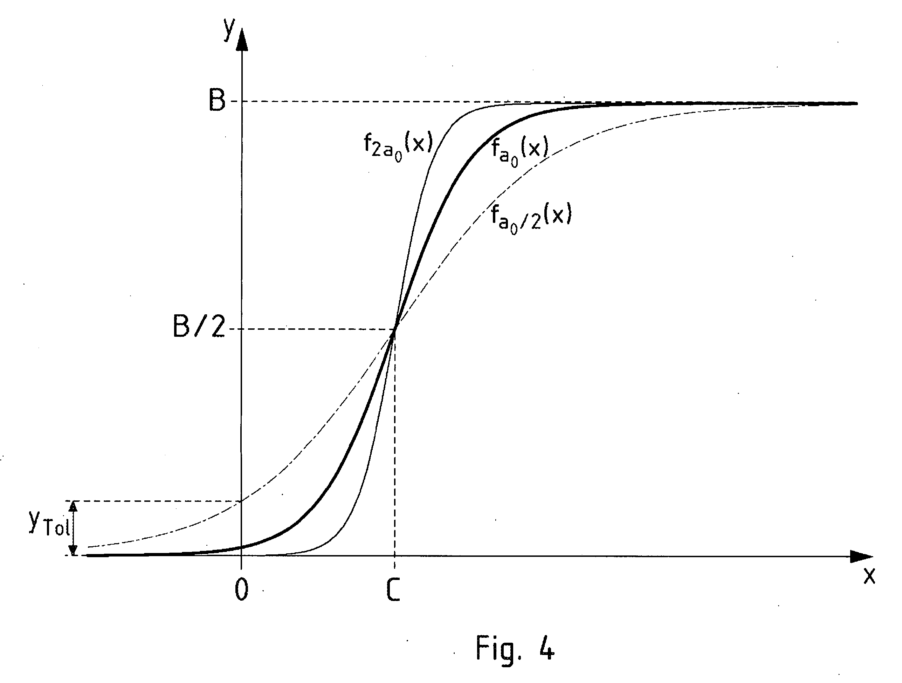

wobei es sich bei den Größen B, a und c um zu bestimmende Parameter der Sigmoide handelt. In Figur 4 sind beispielhaft derartige Sigmoidfunktionen $f_{a_0}$, $f_{a_0/2}$ und $f_{2a_0}$ mit Werten von $a_0$, $2a_0$ und $a_0/2$ für den Parameter a dargestellt. Wie auch in der Figur erkennbar ist, gilt

$$\lim_{x \to -\infty} y(x) = 0 \quad \text{und} \quad \lim_{x \to \infty} y(x) = B$$

Der Parameter B entspricht somit jedenfalls bei unendlicher Dauer des Manövers der Manöverbreite. Der Parameter c entspricht der Wendestelle der Funktion. Der Funktionswert an der Wendestelle beträgt B/2. Die Sigmoide ist zudem punktsymmetrisch bezüglich des Wendepunktes (c,B/2), d.h. $z(\tau)=-z(-\tau)$ für $\tau=x-c$ und $z=y-B/2$. Der Parameter a bestimmt die Steigung der Sigmoide, wobei die Steigung am Wendepunkt durch $a \cdot B/4$ gegeben ist. Es ist somit erkennbar, dass größere Werte von a zu steileren Kurven führen.

Da die Manöverbreite B nur über den gesamten Definitionsbereich der Sigmoide von Werten zwischen $-\infty$ und $+\infty$ realisiert wird und die Sigmoide am Ursprung des Koordinatensystems 301 einen von Null verschiedenen Wert aufweist, ist es vorgesehen, eine Toleranz $y_{tol}$ mit einem vorgegebenen kleinen Wert einzuführen. Beispielhaft ist die Toleranz $y_{tol}$ in Figur 4 für die Sigmoidfunktion $f_{2a_0}$ veranschaulicht. Mit der Toleranz $y_{tol}$ muss dann gelten

$$y(x = 0) = y_{tol} \quad (\text{Bed. 1}) \quad \text{und} \quad y(x = 2c) = D - y_{tol} \quad (\text{Bed. 2})$$

wobei D die gewünschte Manöverbreite ist. Aus der Kombination von Bed. 1 und Bed. 2 folgt, dass der Parameter B der Manöverbreite entspricht, d.h., dass bei einem Ausweichen nach links $B=D$ gilt. Aufgrund von Bed. 1 ergibt sich dann für den Parameter c bei einem Ausweichen nach links, d.h. in positive y-Richtung:

$$c_{left} = \frac{1}{a} \ln\left(\frac{D}{y_{tol}} - 1\right) \qquad (2)$$

Der die Steigung der Sigmoide angebende Parameter a wird so bestimmt, dass die Querbeschleunigung des Kraftfahrzeugs während des Ausweichvorgangs eine vorgegebene Maximalquerbeschleunigung $a_{y,Max}$ nicht überschreitet und dass ein maximaler Querruck $\beta_{Max}$ nicht überschritten wird.

Vernachlässigt man den Schwimmwinkel des Kraftfahrzeugs, entspricht dessen Gierwinkel der Tangente an die Bahn, auf der sich der Fahrzeugschwerpunkt bewegt. Damit gilt für den Gierwinkel in den Punkten entlang der Bahn:

$$\psi = \arctan \frac{dy}{dx} \qquad (3)$$

Die Querbeschleunigung des Kraftfahrzeugs ergibt sich aufgrund von Ackermannbeziehungen zu

$$a_y(x) = v \frac{d\psi}{dt} \qquad (4)$$

Mit dieser Gleichung folgt:

$$a_y(x) = v \frac{d\psi}{dx} \frac{dx}{dt} \qquad (5)$$

Es hat sich gezeigt, dass hier unter Vernachlässigung der Fahrzeugquergeschwindigkeit $dx/dt = v$ gesetzt werden kann. Es gilt damit:

$$a_y(x) = v^2 \frac{d\psi}{dx} \qquad (6)$$

Die Funktion $a_y(x)$ ist ebenfalls punktsymmetrisch bezüglich des Punktes (c,B/2). Anhand des Ausdrucks für $a_y(x)$ in Gleichung (6) lässt sich die betragsmäßig maximale Querbeschleunigung in Abhängigkeit von dem Parameter a berechnen. Dann kann die Gleichung

$$\max_{x \in (-\infty, +\infty)} a_y(x) = a_{y,Max} \qquad (7)$$

nach a aufgelöst werden, um den Parameter $a_{left,1}$ zu bestimmen. Als Lösung erhält man hier:

$$a_{left,1} = (p_0 + 1)^2 \sqrt{\frac{a_{y,Max}}{p_0 D \left(v^2 p_0^2 - a_{y,Max} D p_0 - v^2\right)}} \qquad (8)$$

Es ist dabei

$$p_0 = s_2 \sqrt{\frac{2}{s_1} \left(6v^2 + 2a_{y,Max} D + \frac{4a_{y,Max}^2 D^2}{3v^2}\right)} + \frac{2a_{y,Max} D}{3v^2} + 1 \qquad (9)$$

mit

$$s_1 = 9v^4 + 3a_{y,Max}Dv^2 + 2a_{y,Max}^2 B^2 \tag{10}$$

$$s_2 = \cos\left[\frac{1}{3}\arctan\left(\frac{3v^2\sqrt{81v^8 + 27v^4 a_{y,Max}D^2 + 3a_{y,Max}^4 D^4}}{27v^6 + 9v^2 a_{y,Max}^2 D^2 + 4a_{y,Max}^3 D^3 + 27v^4 a_{y,Max}D}\right)\right] \tag{11}$$

Für den Querruck $\beta$ gilt - ebenfalls mit der Näherung $dx/dt=v$:

$$\beta = \frac{da_y}{dt} = v\frac{da_y}{dx} = v^3\frac{d^2\psi}{dx^2} \tag{12}$$

Anhand dieses Ausdrucks kann der maximal bei dem Ausweichmanöver auftretende Ruck in Abhängigkeit von dem Parameter a berechnet werden. Dann kann die Gleichung

$$\max_{x\in(-\infty,+\infty)} \beta(x) = \beta_{Max} \tag{13}$$

nach a aufgelöst werden, um den Wert $a_{left,2}$ des Parameters a zu bestimmen. Es ergibt sich hier:

$$a_{left,2} = \frac{1}{6v^2}\left(\sqrt[3]{s_3} + \frac{B^2\beta_{Max}^2}{\sqrt[3]{s_3}} + B\beta_{Max}\right) \tag{14}$$

mit

$$s_3 = \frac{\beta_{Max}}{B}\left(864v^6 + B^4\beta_{Max}^2 + 24v^3\sqrt{1296v^6 + 3B^4\beta_{Max}^2}\right) \tag{15}$$

Als maßgeblicher Wert für den Parameter a wird dann der kleinere Wert verwendet, d.h. es gilt:

$$a_{left} = \min\left(a_{left,1}, a_{left,2}\right) \tag{16}$$

Hierdurch wird sichergestellt, dass sowohl die maximale Querbeschleunigung als auch der maximale Querruck die vorgegebenen Werte nicht überschreiten.

Bei einem Ausweichen nach rechts gilt für die Parameter der Sigmoide:

$$\begin{aligned}
B_{right} &= -D \\
c_{right} &= c_{left} \\
a_{right} &= a_{left}
\end{aligned} \tag{17}$$

Die Parameter der Sigmoide werden, wie zuvor dargestellt, in Abhängigkeit von der Fahrzeuggeschwindigkeit, von der gewünschten Manöverbreite, von einer vorgegebenen maximalen Querbeschleunigung und einem vorgegebenen maximalen Querruck bestimmt. Die Fahrzeuggeschwindigkeit wird beispielsweise in dem Fachmann bekannter Weise anhand der Signale von Raddrehzahlsensoren ermittelt. Im Hinblick auf die gewünschte Manöverbreite können verschiedene Strategien gewählt werden:

1) Berechnung der "optimalen Manöverbreite": Die Manöverbreite entspricht hier der Ausweichbreite $y_A$, d.h. dem Querversatz, der zum Ausweichen gerade erforderlich ist. Diese Strategie hat den Vorteil, dass die geringstmögliche Manöverbreite verwendet wird. Die Ausweichdistanz beträgt hier 2c.

2) Ausweichen in die Mitte der benachbarten Fahrspur: Die Manöverbreite wird hier so berechnet, dass sich das Fahrzeug nach dem Ausweichmanöver in der Mitte der angrenzenden Fahrspur befindet. Aufgrund einer Spurerkennung, die beispielsweise mithilfe eines Videosensors vorgenommen werden kann, wird dazu neben den Spurbreiten der aktuellen und der benachbarten Spur die Position des Fahrzeugs innerhalb der momentanen Spur bestimmt. Vorteil dieser Strategie ist das für den Fahrer einfach nachvollziehbare Verhalten des Fahrzeugs während eines automatischen Notausweichens.

3) Ausweichen an den Rand der aktuellen Fahrspur: Hier wird die Manöverbreite so bestimmt, dass sich das Fahrzeug beim Ausweichen an den Rand seiner aktuellen Fahrspur bewegt, ohne diese zu verlassen. Hierzu werden Spurbreite und aktuelle Position des Fahrzeugs innerhalb der Spur beispielsweise mithilfe des Videosensors ermittelt. Aus diesen Daten wird dann die Manöverbreite bestimmt. Diese Strategie kann allerdings nur dann gewählt werden, wenn in der Fahrspur ausreichend Raum für das Ausweichmanöver besteht, d.h., wenn die ermittelte Manöverbreite wenigstens dem notwendigen Querversatz entspricht.

Die maximale Querbeschleunigung beeinflusst die "Härte" des Lenkeingriffs und die Ausweichdistanz. Kleinere Werte führen dabei zu größeren Ausweichdistanzen und sanfteren Ausweichmanövern. Größere Werte führen demgegenüber zu geringeren Ausweichdistanzen aber härteren Lenkeingriffen. In der Ausführungsform, bei der das Lenkmoment auf die Lenkhandhabe aufgebracht wird, ist es vorteilhaft, bereits frühzeitig und sanfter in die Lenkung einzugreifen, so dass der Fahrer den Lenkempfehlungen besser folgen kann. Hier ist daher ein kleinerer Wert der maximalen Querbeschleunigung bevorzugt. Werden die Lenkbewegungen mittels eines Lenkungsaktuators ausgeführt, sind größere Werte für die maximale Querbeschleunigung bevorzugt, um den Lenkeingriff möglichst spät zu beginnen, und dem Fahrer damit möglichst lange die Möglichkeit zum selbsttätigen Eingreifen zu geben.

Der maximale Querruck wird insbesondere durch die maximal mögliche Stellgeschwindigkeit $\dot{\delta}_{H,Max}$ des Lenkungsaktuators begrenzt. Hier gilt

$$\beta_{Max} = \frac{v^2}{l \cdot i_H} \dot{\delta}_{H,Max}, \qquad (18)$$

wobei mit $v$ die Fahrzeuggeschwindigkeit, mit $l$ der Radstand des Fahrzeugs und mit $i_H$ der Übersetzungsfaktor, mit dem der Lenkungsaktuator auf die lenkbaren Räder durchgreift, bezeichnet ist. Gleichfalls kann der maximale Ruck auch durch einen konstanten Wert vorgegeben werden.

Die Ansteuerung des Lenkungsaktuators mittels der Lenkungsaktuatorsteuerungseinrichtung 208 erfolgt vorzugsweise anhand eines Regelverfahrens, bei dem die Steuerung anhand einer Zustandsrückführung vorgenommen wird. Es hat sich gezeigt, dass die Ausweichbahn robust gegenüber einer Vielzahl von Verfahren zur Folgeregelung ist, so dass eine Vielzahl von Regelverfahren einsetzbar ist. Als vorteilhaft hat sich beispielsweise eine flachheitsbasierte Folgeregelung herausgestellt, wie sie in R. Rothfuß et al, "Flachheit: Ein neuer Zugang zur Steuerung und Regelung nichtlinearer Systeme", Automatisierungstechnik, 45 (1997), S. 517-525 für einen Einparkvorgang beschrieben ist.

**Patentansprüche**

**1.** herfahren zum Durchführen eines Ausweichmanövers eines Kraftfahrzeugs mit den folgenden Schritten:

- Erfassen eines Objekts (104) im Umfeld des Kraftfahrzeugs (101), mit dem sich das Kraftfahrzeug (101) auf einem Kollisionskurs befindet,
- Bestimmen einer Bahn für das Ausweichmanöver des Kraftfahrzeugs (101), wobei die Bahn durch eine Sigmoide gegeben ist, deren Gestalt durch wenigstens einen Parameter (B; a; c) bestimmt wird, und wobei der Parameter (B; a; c) in Abhängigkeit von der Geschwindigkeit (v) des Kraftfahrzeugs (101) und/oder einer gewünschten Manöverbreite (D) des Ausweichmanövers ermittelt wird,
- Bestimmen eines Startpunkts, an dem das Ausweichmanöver gestartet wird, in Abhängigkeit von der ermittelten Bahn und
- Beeinflussen eines Lenksystems des Kraftfahrzeugs (101) in Abhängigkeit von der ermittelten Bahn, nachdem das Kraftfahrzeug (101) den Startpunkt erreicht hat.

2. Verfahren nach Anspruch 1,
   **dadurch gekennzeichnet,**
   **dass** ein Parameter (a), der eine Steigung der Sigmoide bestimmt, in Abhängigkeit von der Geschwindigkeit (v) des Kraftahrzeugs (101) derart bestimmt wird, dass eine bei dem Ausweichmanöver auftretende Querbeschleunigung ($a_y$) des Kraftfahrzeugs (101) einen vorgegebenen Maximalwert ($a_{y,Max}$) nicht überschreitet.

3. Verfahren nach Anspruch 1 oder 2,
   **dadurch gekennzeichnet,**
   **dass** der die Steigung der Sigmoide bestimmende Parameter der Sigmoide in Abhängigkeit von der Geschwindigkeit (v) des Kraftfahrzeugs (101) derart bestimmt wird, dass ein bei dem Ausweichmanöver auftretender Querruck (β) einen vorgegebenen Maximalwert ($β_{max}$) nicht überschreitet.

4. Verfahren nach einem der vorangegangenen Ansprüche,
   **dadurch gekennzeichnet,**
   **dass** die Sigmoide durch

$$y(x) = \frac{B}{1 + \exp(-a \cdot (x - c))}$$

gegeben ist, wobei $y(x)$ einen lateralen Versatz des Kraftfahrzeugs und $x$ die zurückzulegende Wegstrecke in Längsrichtung in einem Koordinatensystem (301) ist, dessen Ursprung im Wesentlichen mit dem Startpunkt des Ausweichmanövers übereinstimmt und dessen positive x-Richtung in die an dem Startpunkt vorliegende Fahrzeuglängsrichtung zeigt, wobei a der die Steigung der Sigmoide bestimmender Parameter ist, und wobei B und c weitere Parameter sind, die die Gestalt der Sigmoide bestimmen .

5. Verfahren nach einem der vorangegangenen Ansprüche,
   **dadurch gekennzeichnet,**
   **dass** bei einem Ausweichen in Fahrzeuglängsrichtung nach links für die Parameter gilt:

$$B = D$$

$$c = \frac{1}{a} \ln\left(\frac{D}{y_{tol}} - 1\right)$$

wobei D die Manöverbreite des Ausweichmanövers und $y_{tol}$ eine vorgegebene Toleranz bezeichnet.

6. Verfahren nach einem der vorangegangenen Ansprüche,
   **dadurch gekennzeichnet,**
   **dass** bei einem Ausweichen in Fahrzeuglängsrichtung nach rechts für die Parameter gilt:

$$B = -D$$

# EP 1 926 646 B1

$$c = -\frac{1}{a}\ln\left(\frac{D}{y_{tol}} - 1\right)$$

wobei D die Manöverbreite des Ausweichmanövers und $y_{tol}$ eine vorgegebene Toleranz bezeichnet.

**7.** Verfahren nach einem der vorangegangenen Ansprüche,
**dadurch gekennzeichnet,**
**dass** die Manöverbreite (D) in Abhängigkeit von der Breite einer dem Kraftfahrzeug (101) zugewandten Objektfront (F; F') ermittelt wird.

**8.** Verfahren nach einem der vorangegangenen Ansprüche,
**dadurch gekennzeichnet,**
**dass** die Manöverbreite (D) derart bestimmt wird, dass das Kraftfahrzeug (101) bei dem Ausweichmanöver von einer momentanen Fahrspur in die Mitte einer benachbarten Fahrspur gesteuert wird.

**9.** Computerprogrammprodukt,
**dadurch gekennzeichnet,**
**dass** es einen Algorithmus definiert, der ein Verfahren nach einem der vorangegangenen Ansprüche umfasst.

**10.** Vorrichtung zum Durchführen eines.Ausweichvorgangs eines Kraftfahrzeugs, umfassend

- eine Umfelderfassungseinrichtung (102), mit der wenigstens ein Objekt (104) im Umfeld des Kraftfahrzeugs (101) erfassbar ist, und eine Auswerteeinrichtung (201), mit der die relative Position und Geschwindigkeit des Objekts (104) in Bezug auf das Kraftfahrzeug (101) ermittelbar ist,
- eine Entscheidungseinrichtung (206), mit der eine Entscheidung darüber getroffen werden kann, dass ein Ausweichen des Kraftfahrzeugs (101) aufgrund eines Kollisionskurses mit dem Objekt (104) erforderlich ist,
- eine Bahnvorgabeeinrichtung (207), mit der eine Bahn für das Ausweichen des Kraftfahrzeugs (101) vor dem Objekt bestimmbar wird, wobei die Bahn durch eine Sigmoide gegeben ist, deren Gestalt durch wenigstens einen Parameter bestimmt ist, und wobei der Parameter in Abhängigkeit von der Geschwindigkeit (v) des Kraftfahrzeugs (101) und/oder einer gewünschten Manöverbreite (D) ermittelbar ist,
- eine Auslöseeinrichtung (206), mit der in Abhängigkeit von einer ermittelten Bahnvorgabe ein Startpunkt bestimmbar ist, an dem das Ausweichmanöver zu starten ist, um dem Objekt auszuweichen, und
- eine Steuerungseinrichtung (208), mit der ein Lenkungsaktuator in Abhängigkeit von der Bahnvorgabe steuerbar ist.

**Claims**

**1.** A method for conducting an evasion manoeuvre of a motor vehicle with the following stages:

- Recording an object (104) in the area surrounding the motor vehicle (101), with which the motor vehicle (101) is on a collision course,
- Determination of a course for the evasion manoeuvre of the motor vehicle (101), wherein the course is given by a sigmoid, the design of which is determined by at least one parameter (B; a; c), and wherein the parameter (B; a; c) is determined in dependence on the velocity (v) of the motor vehicle (101) and/or on a required manoeuvre width (D) of the evasion manoeuvre,
- Determination of a starting point from which the evasion manoeuvre is started, in dependence on the determined course, and
- Influencing of a steering system of the motor vehicle (101) in dependence on the determined course, after the motor vehicle (101) has reached the starting point.

**2.** A method according to claim 1,
**characterized in that,**
a parameter (a), which determines an increase in the sigmoid, is determined in dependence on the velocity (v) of the motor vehicle (101) in such a manner that a transverse acceleration ($a_y$) of the motor vehicle (101) which occurs during the evasion manoeuvre does not exceed a specified maximum value ($a_{y,Max}$).

3. A method according to either of claims 1 or 2,
**characterized in that,**
the parameter of the sigmoid which determines the increase in the sigmoid is determined in dependence on the velocity (v) of the motor vehicle (101) in such a manner that a transverse jolt ($\beta$) which occurs during the evasion manoeuvre does not exceed a specified maximum value ($\beta_{Max}$).

4. A method according to any one of the preceding claims,
**characterized in that,**
the sigmoid is given by

$$y(x) = \frac{B}{1 + \exp(-a \cdot (x - c))}$$

wherein $y(x)$ is a lateral displacement of the motor vehicle and $x$ is the distance covered in the longitudinal direction in a coordinates system (301), the origin of which is essentially concordant with the starting point of the evasion manoeuvre, and the positive x direction of which points in the longitudinal direction of the motor vehicle present at the starting point, wherein a is the parameter which determines the increase of the sigmoid, and B and c are further parameters which determined the design of the sigmoid.

5. A method according to any one of the preceding claims,
**characterized in that,**
during evasion in the longitudinal direction of the motor vehicle to the left, the following applies for the parameters:

$$B = D$$

$$c = \frac{1}{a} \ln\left(\frac{D}{y_{tol}} - 1\right)$$

wherein D refers to the manoeuvre width of the evasion manoeuvre and $y_{tol}$ refers to a specified tolerance.

6. A method according to any one of the preceding claims,
**characterized in that,**
during evasion in the longitudinal direction of the motor vehicle to the right, the following applies for the parameters:

$$B = -D$$

$$c = -\frac{1}{a} \ln\left(\frac{D}{y_{tol}} - 1\right)$$

wherein D refers to the manoeuvre width of the evasion manoeuvre and $y_{tol}$ refers to a specified tolerance.

7. A method according to any one of the preceding claims,
**characterized in that,**
the manoeuvre width (D) is determined in dependence on the width of an object front (F; F') which faces the motor vehicle (101).

**8.** A method according to any one of the preceding claims,
**characterized in that,**
the manoeuvre width (D) is determined in such a manner that the motor vehicle (101) is steered from a current road lane into the centre of an adjacent road lane.

**9.** A computer programme product,
**characterized in that,**
it defines an algorithm which comprises a method according to any one of the preceding claims.

**10.** A device for implementing an evasion manoeuvre of a motor vehicle, comprising

- a device for recording the surrounding area (102), with which at least one object (104) can be recorded in the area surrounding the motor vehicle (101) and an evaluation device (201), with which the relative position and velocity of the object (104) can be determined in relation to the motor vehicle (101)
- a decision device (206) with which a decision can be made as to whether an evasion manoeuvre of the motor vehicle (101) is required due to a collision course with the object (104)
- a lane specification device (207) with which a lane for the evasion of the motor vehicle (101) before the object can be determined, wherein the lane is given by a sigmoid, the design of which is determined by at least one parameter, and wherein the parameter can be determined in dependence on the velocity (v) of the motor vehicle (101) and/or a required manoeuvre width (D)
- a triggering device (206) with which a starting point can be determined, in dependence on a determined lane specification, at which the evasion manoeuvre is to be started in order to evade the object, and
- a control device (208) with which a steering actuator can be controlled in dependence on the lane specification.

**Revendications**

**1.** Procédé pour l'exécution d'une manoeuvre d'évitement d'un véhicule à moteur avec les étapes suivantes :

- détection d'un objet (104) dans le voisinage d'un véhicule à moteur (101), le véhicule à moteur (101) se trouvant sur une trajectoire de collision avec le susdit objet,
- définition d'une trajectoire pour la manoeuvre d'évitement du véhicule à moteur (101), la trajectoire étant donnée par une sigmoïde dont la forme est définie par au moins un paramètre (B ; a ; c), et le paramètre (B ; a ; c) étant déterminé en fonction de la vitesse (v) du véhicule à moteur (101) et/ou d'une largeur de manoeuvre (D) souhaitée de la manoeuvre d'évitement,
- définition d'un point de départ à partir duquel la manoeuvre d'évitement est commencée, en fonction de la trajectoire déterminée et
- influence d'un système de direction du véhicule à moteur (101) en fonction de la trajectoire déterminée, après que le véhicule à moteur (101) a atteint le point de départ.

**2.** Procédé selon la revendication 1,
**caractérisé en ce qu'**
un paramètre (a), lequel définit une pente de la sigmoïde, est défini en fonction de la vitesse (v) du véhicule à moteur (101) de telle sorte qu'une accélération transversale ($a_y$) du véhicule à moteur (101) se produisant pendant la manoeuvre d'évitement ne dépasse pas une valeur maximale spécifiée ($a_{y,Max}$).

**3.** Procédé selon la revendication 1 ou 2,
**caractérisé en ce que**
le paramètre (a) de la sigmoïde définissant la pente de la sigmoïde est défini en fonction de la vitesse (v) du véhicule à moteur (101) de telle sorte qu'un à-coup transversal ($\beta$) se produisant pendant la manoeuvre d'évitement ne dépasse pas une valeur maximale spécifiée ($\beta_{Max}$) .

**4.** Procédé selon l'une des revendications précédentes,
**caractérisé en ce que**
la sigmoïde est donnée par

$$y(x) = \frac{B}{1 + \exp(-a \cdot (x - c))} \quad,$$

y(x) étant un décalage latéral du véhicule à moteur et x étant le trajet parcouru dans le sens longitudinal dans un système de coordonnées (301), dont l'origine coïncide essentiellement avec le point de départ de la manoeuvre d'évitement et dont la direction x positive est orientée dans la direction longitudinale du véhicule passant par le point de départ, a étant le paramètre définissant la pente de la sigmoïde, et B et c étant d'autres paramètres définissant la forme de la sigmoïde.

5. Procédé selon l'une des revendications précédentes,
**caractérisé en ce que,**
lors d'un évitement vers la gauche dans la direction longitudinale du véhicule, les paramètres sont donnés par :

$$B = D$$

$$c = \frac{1}{a} \ln\left(\frac{D}{y_{tol}} - 1\right) \quad,$$

D étant la largeur de manoeuvre de la manoeuvre d'évitement et $y_{tol}$ désignant une tolérance spécifiée.

6. Procédé selon l'une des revendications précédentes,
**caractérisé en ce que,**
lors d'un évitement vers la droite dans la direction longitudinale du véhicule, les paramètres sont donnés par :

$$B = -D$$

$$c = -\frac{1}{a} \ln\left(\frac{D}{y_{tol}} - 1\right) \quad,$$

D étant la largeur de manoeuvre de la manoeuvre d'évitement et $y_{tol}$ désignant une tolérance spécifiée.

7. Procédé selon l'une des revendications précédentes,
**caractérisé en ce que**
la largeur de manoeuvre (D) est déterminée en fonction de la largeur d'un front d'objet (F ; F') tourné vers le véhicule à moteur (101).

8. Procédé selon l'une des revendications précédentes,
**caractérisé en ce que**
la largeur de manoeuvre (D) est définie de telle sorte que, lors de la manoeuvre d'évitement, le véhicule à moteur (101) est piloté d'une voie de circulation instantanée jusqu'au milieu d'une voie de circulation voisine.

9. Produit de programme informatique,
**caractérisé en ce que**
ledit produit définit un algorithme, lequel comprend un procédé selon l'une des revendications précédentes.

10. Dispositif pour l'exécution d'un processus d'évitement d'un véhicule à moteur, comprenant

- une unité de détection de voisinage (102), avec laquelle au moins un objet (104) est détectable dans le voisinage du véhicule à moteur (101), et une unité d'exploitation (201), avec laquelle la position relative et la vitesse de l'objet (104) sont déterminables relativement au véhicule à moteur (101),

- une unité de décision (206) avec laquelle une décision peut être prise relativement à la nécessité de l'évitement par le véhicule à moteur (101) en raison d'une trajectoire de collision avec l'objet (104),

- une unité de spécification de trajectoire (207) avec laquelle une trajectoire est définissable pour l'évitement de l'objet par le véhicule à moteur (101), la trajectoire étant donnée par une sigmoïde dont la forme est définie par au moins un paramètre, et le paramètre étant déterminable en fonction de la vitesse (v) du véhicule à moteur (101) et/ou d'une largeur de manoeuvre (D) souhaitée,

- une unité de déclenchement (206) avec laquelle, en fonction d'une spécification de trajectoire déterminée, un point de départ est définissable auquel la manoeuvre d'évitement doit être commencée afin d'éviter l'objet et

- une unité de commande (208) avec laquelle un actuateur de direction est commandable en fonction de la spécification de trajectoire.

Fig. 1

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2004193374 A1

**In der Beschreibung aufgeführte Nicht-Patentliteratur**

- **R. Rothfuß et al.** Flachheit: Ein neuer Zugang zur Steuerung und Regelung nichtlinearer Systeme. *Automatisierungstechnik,* 1997, vol. 45, 517-525